# EUROPEAN PATENT APPLICATION

(11) **EP 1 188 553 A1**
(43) Date of publication of application: **20.03.2002**
(21) Application number: 00308033.0
(22) Date of filing: 15.09.2000
(51) Int. Cl.: B32B 27/10, B32B 31/00

(54) **Separator sheet for decorative laminates**

(71) Applicant: WESTVACO CORPORATION, New York New York 10171 (US)
(72) Inventor: Babcock, Bruce W., Charleston, SC 29407 (US); Cordatos, Haralambos, Eldersburg, MD 21784 (US); Cavagna, Giancarlo A., Silver Spring, MD 20904 (US); Zafiris, Georgios S., Columbia, MD 21044 (US)
(74) Representative: Walker, Ross Thomson

(57) **Abstract**

A separator sheet for use in the manufacture of decorative laminates comprises a paper backing having applied to one surface thereof a polymer layer having good release properties.

## Description

### Background of the Invention

The present invention relates generally to the manufacture of decorative laminates, and more particularly to a separator sheet useful in the manufacture of such products.

Decorative laminates have found widespread acceptance as mar resistant surfaces for wall-coverings, paneling, table tops, counter tops, vanities and the like. These laminates are conventionally formed by consolidating several laminae under heat and pressure to form a unitary structure which usually carries on at least one of its surfaces a surface decoration which can range from something as simple as a solid color to something as complex as an embossed, simulated woodgrain finish.

Preparation of such laminates generally involves the use of one or more sheets of corestock in combination with a decorative or print sheet. The corestock usually comprises an unbleached kraft paper which has been impregnated with a relatively inexpensive thermosetting resin such as phenolic resin, polyester resin, or the like, which is easily cross-linked upon the application of heat and pressure.

Laminated assemblies of this type may be individually laminated by application of heat and pressure, however, for obvious economic reasons, it is common practice to consolidate a plurality of these individual laminating assemblies into one large assembly or press pack, and then to laminate this pack in one operation. Where it is desired to obtain laminates having one major surface either smooth or textured as described above, the press pack will be built from these individual laminating assemblies placed back-to-back.

In building such a pack, an individual laminating assembly is placed with its decorative or print sheet adjacent to a press plate. The corestock layers are then placed over the decorative sheet and another individual laminating assembly is then positioned back-to-back with the first assembly, with one or more separator sheets being placed between the corestock sheets of the individual assemblies. Another press plate is positioned on the second individual assembly adjacent to its decorative or print sheet. Thus at this point, the pair of laminating assemblies can be considered as being in mirror image relationship between the press plates, separated only by the separator sheet(s).

As previously indicated, this multiple laminating method affords definite economic advantages. However, as oftentimes practiced commercially, it also has certain inherent disadvantages. Foremost among these is the fact that in order to be truly effective, the required separator sheet must, in many cases, be prepared from relatively costly materials, and these materials have limitations vis-a-vis recyclability.

The separator sheet most widely used in the industry today consists of a saturating paper or other type of paper such as linerboard coated with sodium alginate and other proprietary release enhancing additives. However such coatings have high viscosity which requires the use of an air knife coater for application with all of the limitations its use introduces. In addition, a calcium salt base layer is frequently applied to promote coating holdout, thus adding another step to the production process, which also increases costs. Examples of such separator sheets are disclosed, for example, in prior U.S. patents Nos. 3,050,434 and 3,215,579. Other patents granted subsequent to the two mentioned above have disclosed other treatments for such separator sheets, but none have enjoyed any significant commercial acceptance.

Accordingly, it will be seen that there remains a need in the art for a separator sheet useful in the manufacture of decorative laminates that is simple to make, economical and effective in operation. The present invention addresses these needs.

### Summary of The Invention

It has now been found that an effective and inexpensive separator sheet for releasing laminate assemblies from a back-to-back press pack can be made by applying to one surface of a suitable paper substrate backing sheet, such as saturating paper or kraft linerboard, a polymer film or coating having good release properties. This combination of elements when inserted into a press pack between back-to-back laminate assemblies as a symmetrical structure, e.g., with a second uncoated backing sheet located adjacent to the polymer film or coating of the first backing sheet, yields good release characteristics since the first coated backing sheet remains as a part of one of the laminate assemblies and the second uncoated backing sheet remains as a part of the other laminate assembly. The remnants of the polymer coating is generally ground off during the trimming and finishing step leaving very little to be recycled or recovered. The invention has been found to be effective whether or not the backing sheets are treated with resin or left dry prior to the press cycle.

The separator sheet of the present invention offers considerable advantages with respect to the separator sheets currently used in the industry. First, there is the simplicity of the one step coating/laminating process for making the separator sheet as compared with the multiple steps necessary for making the currently used separator sheets. Secondly, because the separator sheet of the present invention includes a paper backing sheet, it is easier to handle and has greater integrity than an unsupported sheet of polymer film that has been used by some decorative laminate manufacturers as a separator sheet.

### Detailed Description

The polymer/paper separator sheet of the present invention comprises in its preferred embodiment a biaxially oriented, polypropylene film having a thickness of about 0.00254 cm (0.001 inch), and a melting point greater than about 160 degrees C., that is laminated to a suitable paper backing sheet using a polyolefin tie layer. An example of a biaxially oriented, slip modified polypropylene film suitable for the present invention is grade #RLS-100, supplied by Applied Extrusion Technologies, Inc. An example of the tie coat material is #PP62544A, supplied by Huntsman Polymers, and the backing sheet is preferably a saturating paper HD03 grade, having a weight of from about 40.82-52.16 kg (90-115 lbs/ream) ream size 278.7 m² (ream size 3000 sq. ft.) supplied by Westvaco Corporation.

Other polymer materials have also been found to be useful in the present invention. In general, it is believed that the polymer film/coating should have a low surface energy, e.g., less than about 44 dynes/cm, and a high melting point, e.g., greater than about 160 degrees C., which is higher than the temperature reached during the production of decorative laminates (approx. 140-150 degrees C.). The polymer layer should also have a low affinity with the saturated corestock sheets.

In order that those skilled in the art may more fully understand and appreciate the concept disclosed herein, the following Example shows by way of illustration the results obtained from a screening of various polymer materials for the separator sheet of the present invention. In this Example, the release result is arrived at as follows. Two laminates, each made from a standard melamine-saturated decorative paper and three phenolic resin impregnated 59.87 kg/278.7 m² 132 lb/ream) saturated sheets, separated by the polymer coated separator sheet to be tested, and a second backing sheet, are pressed back-to-back at 5.93 k/cm² (1200 psi), while heating to 107.1°C (225 degrees F.) over a period of 23 minutes. The laminate assemblies are then heated to 104.4°C (285 degrees F.) over a period of 17 minutes, and allowed to cool down for 15 minutes prior to opening the press. Aluminum foil is used to separate the decorative layers from the steel caul plates.

The release result is rated as "Excellent" if the two laminate assemblies separate from one another cleanly during handling and trimming; "Good" if a weak force has to be applied to get a clean separation; or "Poor" if a significant force has to be applied to separate the two assemblies, and fibers are pulled off. The results are shown in the following Table.

**TABLE**

| Release Structure | Results | Surface Energy (dyn/cm) | Melting Temp. (°C) |
|---|---|---|---|
| Slip modified laminated BOPP 0.00254 cm (1/1000" thickness)/PP tie layer/Paper | Excellent | 30-32 | ∼160°C |
| Non-slip modified laminated BOPP 0.00191 cm (0.75/1000" thickness)/ PE tie layer/Paper | Excellent | 30-32 | ∼160°C |
| Extruded PP/Paper | Very Good | 30-34 | ∼160°C |
| Extruded PP + Erucamide slip additive (1%wt)/Paper | Very Good | ∼30 | ∼160°C |
| Extruded PP (containing -20%wt PE)/Paper | Fair to Good | 30-32 | 150-160°C |
| Extruded PP (containing -20%wt PE) + -5% or 2.5%wt UHMW silicone/Paper | Good to Very Good | 30-34 | 150-160°C |
| Extruded TPX/Paper | Fair | ∼28 | ∼235°C |
| Extruded PET (pgmtd.)/Paper | None | 40-42 | ∼255°C |
| Extruded PET (clear)/Paper | None | 40-42 | ∼255°C |
| Extruded PET (with silicone)/Paper | None | 36-38 | ∼255°C |
| Oriented PET film (MYLAR OLAF50/50XM123) | Very Good | 44-46 | 255°-260°C |
| PBT/Paper | None | ∼34 | ∼225°C |
| DuPont Selar #PA3426 (amorphous nylon)/Paper | Very Poor | 44-46 | ∼210°C |
| 90% amorphous nylon + 10% nylon-6/Paper | Very Poor | 46-44 | ∼210°C |
| 80% amorphous nylon + 20% nylon-6/Paper | Fair | 54-56 | ∼210°C |
| Nylon-6/Film | None | 40-50 | ∼220°C |
| LDPE/Paper | None | 30-32 | 110°-130°C |
| PVOH coating on oriented PET MYLAR 50XM123 film | None | 48-50 | ∼200°C |
| EVOH film (EF-XL12/EF-E15 | None | 54-56 | 160°-190°C |
| BOPP: Biaxially oriented polypropylene | | | |
| PP : Polypropylene | | | |
| TPX : Polymethylpentene | | | |
| PET : Polyethylene terephthalate (polyester) | | | |
| PE : Polyethylene | | | |
| UHMM Silicone: Ultra high and lower molecular weight silicones: Dow Corning #MB25 - 501, and MB50-01, respectively | | | |
| PVOH: Polyvinyl alcohol | | | |
| EVOH: Ethylene-vinyl alcohol copolymer | | | |
| PBT: Polybutylene Terephthlate | | | |
| LDPE: Low Density Polyethylene | | | |

While the invention has been particularly described with reference to a preferred embodiment, it will be understood that other changes and modifications may occur to those skilled in the art, without departing from the spirit and scope of the invention as defined in the appended claims.

## Claims

1. A separator sheet for use in the manufacture of decorative laminates comprising, a paper backing sheet having applied to one surface thereof a polymer layer having a surface energy of about 44 dynes/cm and a melting point greater than about 160 degrees C.

2. The separator sheet of claim 1 wherein the polymer layer is selected from the group consisting of polypropylene and biaxially oriented polypropylene.

3. The separator sheet of claim 2 wherein the polymer layer is a biaxially oriented, polypropylene film having a thickness of about 0.00254 cm (0.001 inch).

4. The separator sheet of claim 3 wherein the film is adhered to the backing sheet with a polyolefin tie layer.

5. The separator sheet of claim 2 wherein the polymer layer is an extrusion coated layer of polypropylene.

6. A separator sheet for use in the manufacture of decorative laminates comprising, a paper backing sheet having applied to one surface thereof a polymer layer selected from the group of polymers consisting of biaxially oriented polypropylene, polypropylene, polymethylpentene, polyethylene terephthlate, silicone, polyamide, amorphous polyamide, polyvinyl alcohol and ethylene vinyl alcohol, wherein the polymer layer has a surface energy of about 44 dynes/cm and a melting point greater than about 160 degrees C.

7. The separator sheet of claim 6 wherein the polymer layer comprises an extrusion coated layer.

8. The separator sheet of claim 7 wherein the polymer layer comprises a film layer.

9. The separator sheet of claim 6 wherein the polymer layer contains a slip agent.
